# EUROPÄISCHE PATENTSCHRIFT

(11) **EP 1 104 075 B1**
(45) Veröffentlichungstag und Bekanntmachung des Hinweises auf die Patenterteilung: **19.09.2007**
(21) Anmeldenummer: 00124413.6
(22) Anmeldetag: 08.11.2000
(51) Int. Cl.: H02J 7/14, B60W 30/18

(54) **Verfahren zur Ansteuerung eines automatisierten Schaltgetriebes und eines Generators**
Method for controlling an automatic gearbox and a generator
Procédé de régulation d'une transmission automatique et un générateur

(30) Priorität: 26.11.1999 DE 19956934
(43) Veröffentlichungstag der Anmeldung: 30.05.2001
(73) Patentinhaber: ROBERT BOSCH GMBH, 70442 Stuttgart (DE)
(72) Erfinder: Bolz, Martin-Peter, 71720 Oberstenfeld (DE)

(56) Entgegenhaltungen:
- EP-A- 0 416 871
- DE-A- 4 102 882
- DE-A- 19 638 357

## Beschreibung

Die Erfindung bezieht sich auf ein Verfahren zur koordinierten Ansteuerung eines automatisierten Schaltgetriebes und eines Generators zur Vermeidung von wahrnehmbaren Momentenstößen am Verbrennungsmotor und zur Konstanthaltung der Bordnetzspannung in einem Kraftfahrzeug.

### Stand der Technik

Zur Vermeidung von Spannungseinbrüchen im Bordnetz eines Kraftfahrzeuges, die durch Zuschaltung von starken elektrischen Verbrauchern hervorgerufen werden, ist es bekannt, durch Erhöhung des Erregerstromes am Generator, die von diesem abgegebene Leistung zu erhöhen. Dadurch wird jedoch das bremsende Moment erhöht, so daß bei niedrigen Drehzahlen der Brennkraftmaschine ein Drehzahleinbruch auftreten kann.

Bei Systemen, die eine Load-Response-Funktion aufweisen, können Vorkehrungen getroffen werden, die eine zu starke Belastung des Generators verhindern. So kann beispielsweise zur Regelung der Ausgangsspannung eines von der Brennkraftmaschine angetriebenen elektrischen Generators, bei dem die Load-Response-Funktion während der Fahrt aktiviert wird, der Erregerstrom nach dem Zuschalten eines starken elektrischen Verbrauchers kontinuierlich erhöht werden, um Drehzahleinbrüche zu vermeiden. Die Load-Response-Funktion wird während der Fahrt mit einer Drehzahlauswertung verknüpft. Die Erhöhung des Erregerstromes erfolgt in Abhängigkeit vom Vergleich der gemessenen Drehzahl mit einem Schwellwert, während ein Deaktivieren der Load-Response-Funktion unter bestimmten Umständen nicht vorgesehen ist.

Die DE-OS 196 38 357 offenbart eine Einrichtung zur Spannungsregelung bei einem von einer Brennkraftmaschine angetriebenen Generator, dessen Spannungsregeler mit einer Load-Response-Funktion ausgestattet ist, die ein schnelles Ansteigen des Erregerstromes bei Zuschalten eines oder mehrerer starker elektrischer Verbraucher verhindert. Durch eine Ansteuerschaltung kann im Fahrbetrieb bei sinkenden Drehzahlen die Load-Response-Fahrt-Funktion, die sonst während der Fahrt aktiviert ist, gesperrt werden, so daß der Erregerstrom schnell ansteigt und die diesem Betriebszustand der Brennkraftmaschine bei aktiver Load-Response-Funktion auftretenden Spannungseinbrüche vermieden werden können. Bei Fahrzeugen mit automatisierten Schaltgetrieben kann der Spannungseinbruch im Bordnetz besonders stark ausgeprägt sein, wenn beim Gangwechsel in den Stellmotoren der Kupplung und des Getriebegestelles kurzfristige Ströme bis zu 30 A auftreten. Der Spannungseinbruch kann zudem zu einer Helligkeitseinbuße an der Fahrzeugbeleuchtung führen.

### Darstellung der Erfindung

Die während des Gangwechsels an einem automatisierten Schaltgetriebe deaktivierte Load-Response-Funktion erlaubt es, den bei Öffnung der Kupplung auftretenden zusätzlichen Momentenstoß zu einer schnellen Anpassung der Drehzahl der Brennkraftmaschine auszunutzen, ungeachtet der Tatsache, ob es sich bei den Schaltvorgängen um Hochschaltvorgänge oder um Rückschaltvorgänge handelt - in beiden Fallen ist eine Drehzahlanpassung erforderlich. Im Falle des Gangwechsels lassen sich die Stellmotoren sowohl für die Hauptkupplung, als auch für das automatisierte Schaltgetriebe genau dann ansteuern, wenn die Hauptkupplung geöffnet hat und zu einem wohldefiniertem Zeitpunkt die Brennkraftmaschine mit einem zusätzlichen Drehmoment beaufschlagt werden kann.

Dadurch sinkt die Drehzahl der Brennkraftmaschine bei Hochschaltvorgängen, während sie bei Rückschaltvorgängen auf die Zieldrehzahl der jeweils gewählten Gangstufe abhängig vom Motorausgangsmoment eingeregelt werden kann. Die Einregelung der Zieldrehzahl kann mittels des erfindungsgemäß vorgeschlagenen Verfahrens auf die jeweils neue Zieldrehzahl um so präziser eingeregelt werden, je weiter entfernt von Null das Ausgangsdrehmoment an der Brennkraftmaschine liegt.

Eine vorteilhafte Möglichkeit einer Deaktivierung der Load-Response-Funktion an einem Generator besteht darin, die Zeitkonstante an diesem beispielsweise durch Vorsehen einer seriellen Schnittstelle vorzugeben und die Load-Response-Funktion durch Nullsetzen der Zeitkonstante zu deaktivieren.

### Zeichnung

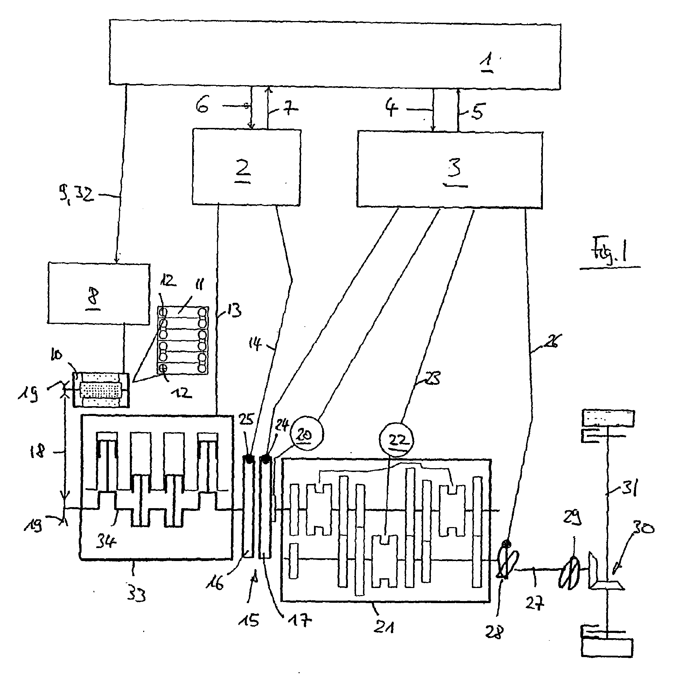

Anhand einer Zeichnung sei das erfindungsgemäße Verfahren eingehender erläutert. Die einzige Figur zeigt ein System zur Ansteuerung eines Generators an einer Brennkraftmaschine und eines automatisierten Schaltgetriebes, wobei zwischen der Brennkraftmaschine und dem automatisierten Getriebe eine Hauptkupplung vorgesehen ist.

### Ausführungsvariante

Über eine Fahrzeugsteuerung 1 werden eine Motorsteuerung 2, eine Kupplungs- und Getriebesteuerung 3 sowie ein Generatorregler 8 parallel angesteurt; dabei gibt die Fahrzeugsteuerung 1 an der Kupplungs- und Getriebesteuerung 3 über eine Sollgangvorgabe 4 die jeweilige Schaltstufe im automatisierten Schaltgetriebe 21 vor. Der Istzustand - d.h. der eingelegte Gang, die aktuelle Schaltstufe - wird über die Statusabfrage 5 an die Fahrzeugsteuerung 1 von der Kupplungs- und Getriebesteuerung 3 zurückgemeldet. Die Fahrzeugsteuerung 1 überträgt die Motorausgangsmomentvorgabe 6 an die Motorsteuerung 2, von der die aktuell vorherrschende Motordrehzahl an die Fahrzeugsteuerung 1 zurückgemeldet wird, was zu einer Änderung der Sollgangvorgabe 4 an die Kupplungs- und Getriebesteuerung 3 führen kann. Schließlich kann der Generatorregler 8 über eine Generatoransteurung 9 derart angesteuert werden, daß am Generator 10 eine Load-Response-Funktion 32 aktiviert oder in Abhängigkeit von vorgebbaren Bedingungen aktiviert oder deaktiviert wird. Der Generator 10 ist einer Brennkraftmaschine 33 zugeordnet und wird über diese mittels eines um Riemenscheiben 19 umlaufenden Keil- oder Zahnriemens 18 angetrieben. Vom Generator 10 wird eine Batterie 11 aufgeladen, deren Batteriepole 12 über entsprechend dimensionierte Anschlußleitungen mit dem Generator 10 verbunden sind.

Die Brennkraftmaschine 33 - vier oder mehr Zylinder enthaltend - stellt ihr Ausgangsdrehmoment an einer motorseitigen Kupplungsscheibe 16 einer Kupplung 15 zur Verfügung. Im geschlossenen Zustand der Kupplung 15 wird das motorseitige Abtriebsmoment an die getriebeseitige Schwungscheibe 17 übertragen. Mittels des zwischen der getriebenseitigen Schwungscheibe 17 und dem Getriebeabtrieb 28 vorgesehenen automatisierbaren Schaltegetriebes 21 wird das Drehmoment der Brennkraftmaschine 33 an eine Gelenkwelle 27 und über diese an einen Achsantrieb 29 und ein Differentialgetriebe 30 an eine Antriebsachse 31 des Fahrzeugs übertragen. Beiden Kupplungsscheiben 16 bzw. 17 sind jeweils ein Motordrehzahlaufnehmer 25 bzw. ein Getriebedrehzahlaufnehmer 24 zugeordnet, über welche die jeweils aktuellen Drehzahlen von Brennkraftmaschine 33 und die Drehzahl der die Eingangswelle des automatisierten Schaltgetriebes 21 an die jeweiligen Steuerung 2 bzw. 3 übermittelt werden. Zur Trennung der beiden Kupplungsscheiben 16, 17 der Kupplung 15 voneinander ist ein Stellmotor 20 vorgesehen, während die Schaltvorgänge im automatisierten Schaltgetriebe 21 durch ein eigens diesem zugeordneten Stellmotor 22 ausgeführt werden. Beiden Stellmotoren 20, 22 sind über separate Ansteuerleitungen 23 von der Kupplungs- und Getriebesteuerung 3 aus ansteuerbar, wenn sich die Sollgangvorgabe 4 an der Kupplungs- und Getriebesteuerung 3 aufgrund einer Änderung der Motordrehzahl der Brennkraftmaschine 33 ändern sollte. Am Getriebeabtrieb 28 wird die Drehzahl am Getriebeausgang des automatisierten Schaltgetriebes 21 durch einen Getriebeausgangsdrehzahlaufnehmer und eine Übertragungsleitung 26 an die Kupplungs- und Getriebesteuerung 3 übermittelt.

Im Regelfall ist die Load-Response-Funktion 32 am Generatorregler 8 des Generators 10 aktiviert, um zu verhindern, daß Momentenstöße die Brennkraftmaschine 33 bei der Regelung der Leerlaufdrehzahl zu stark beeinträchtigen oder daß auftretende Momentenstöße vom Fahrer oder dem Insassen des Fahrzeuges wahrgenommen werden können.

### Die Funktionsweise des erfindungsgemäßen Verfahrens stellt sich folgt dar:

Bei einer Änderung der Sollgangvorgabe 4 an der Kupplungs- und Getriebesteuerung 3 durch die Fahrzeugsteuerung 1 wird dem Generatorregler 8 des Generators 10 parallel dazu ein Signal übermittelt, die Load-Response-Funktion 32 zu deaktivieren. Unmittelbar danach werden die dem Gangwechsel und die Trennung der Kupplungsscheiben 16 und 17 herbeiführenden Stellmotoren 20, 22 via Ansteuerungsleitungen 23 von der Kupplungs- und Getriebesteuerung 3 aus angesteuert. Durch die Trennung der Kupplungsscheiben 16, 17 wird die Brennkraftmaschine 33 mit einem zusätzlichen Drehmoment belastet. Sobald dieses zusätzliche Moment bremsend auf die Brennkraftmaschine 33 einwirkt, tritt ein das Hochschalten erlaubende Absenkung der Drehzahl der Brennkraftmaschine 33 ein. Bei einer Herunterschaltung in die nächst darunterliegende Schaltstufe des automatisierten Schaltgetriebes 21, wird ein Motordrehzahlregler der Motorsteuerung 2 aktiv, der die Brennkraftmaschine 33 auf die jeweilige Zieldrehzahl um so präziser einzuregeln vermag, je weiter das Ausgangsdrehmoment von Null entfernt liegt; dadurch haben eventuell auftretende Schwankungen im Drehmoment einen geringeren Einfluß auf die Zeitspanne, in der die Drehzahl auf die Zieldrehzahl eingeregelt ist.

Durch die mit dem erfindungsgemäßen Verfahren erzielbare Unterdrückung der Load-Response-Funktion 32 während des Gangwechsels, kann die Rotationsenergie der Brennkraftmaschine 33 zum schnelleren Erreichen einer beim Hoch- bzw. Herunterschalten erforderlichen Drehzahlanpassung ausgenutzt werden. Das Abschalten der Load-Response-Funktion 32 während des Gangwechsels läßt das Aufbringen eines zusätzlichen Lastmomentes auf die Brennkraftmaschine 33 durch den Generator 10 zu, während gleichzeitig durch das Abschalten der Load-Response-Funktion 32 ein rasches Ansteigen des Erregerstromes I_{Err} am Generator 10 herbeigeführt werden kann, was zu einer Erhöhung der Leistungsabgabe durch diesen führt, was wiederum die Verhinderung eines Spannungseinbruches im Bordnetzes eines Fahrzeuges zur Folge hat.

Durch die Ausbildung einer seriellen Schnittstelle an einem Generator 10 läßt sich eine Zeitspanne, eine Zeitkonstante für das Aktivsein oder das Deaktiviertsein der Load-Response-Funktion 32 vorgeben. Beträgt diese Zeitkonstante Null, so ist die Load-Response-Funktion 32 am Generatorregler 8 deaktiviert, der Gangwechsel am automatisierten Schaltgetriebe 21 kann durch Ausnutzung eines zusätzlich durch den Generator 10 aufbringbaren Lastmomentes erfolgen, wobei eine schnelle Drehzahlanpassung erreichbar ist.

### Bezugszeichenliste

- 1: Fahrzeugsteuerung
- 2: Motorsteuerung
- 3: Kupplungs- und Getriebesteuerung
- 4: Sollgangvorgabe
- 5: Istgangabfrage, Statusabfrage
- 6: Motorausgangsmomentvorgabe
- 7: Motordrehzahlabfrage
- 8: Generatorregler
- 9: Generatoransteuerung
- 10: Generator
- 11: Batterie
- 12: Batteriepol
- 13: Motoransteuerung
- 14: Motordrehzahldetektor
- 15: Kupplung
- 16: motorseitige Kupplungsscheibe
- 17: getriebeseitige Kupplungsscheibe
- 18: Riemen
- 19: Riemenscheibe
- 20: Kupplungsstellmotor
- 21: Getriebe
- 22: Getriebestellmotor
- 23: Ansteuerung
- 24: Getriebedrehzahlaufnehmer
- 25: Motordrehzahlaufnehmer
- 26: Getriebeausgangsdrehzahlaufnehmer
- 27: Gelenkwelle
- 28: Getriebeabtrieb
- 29: Achsantrieb
- 30: Differential
- 31: Antriebsachse
- 32: Load-Response-Funktion
- 33: Brennkraftmaschine
- 34: Kurbelwelle

## Patentansprüche

1. Verfahren zum Konstanthalten der Bordnetzspannung in einem Fahrzeug mit Brennkraftmaschine (33) mit einem über einen Regler (8) ansteuerbaren Generator (10), der mit einer Load-Response-Funktion (32) belegbar ist, die während des Auftretens vorgebbarer Bedingungen aktivierbar- oder deaktivierbar ist, **dadurch gekennzeichnet, dass** bei einem über eine Kupplungs- und Getriebesteuerung (3) initiierten Gangwechsel an einem automatisierten Schaltgetriebe (21) am Regler (8) des Generators (10) die Load-Response-Funktion (32) deaktiviert ist, wodurch ein zusätzliches durch den Generator (10) erzeugbares Lastmoment auf die Brennkraftmaschine (33) durch Ansteuerung von Stellmotoren (20, 22) für die Kupplung (15) und das automatisierte Schaltgetriebe (21) aufgebracht wird.

2. Verfahren gemäß Anspruch 1, **dadurch gekennzeichnet, dass** zum Zeitpunkt der Ansteuerung der Stellmotoren (20, 22) bei Hochschaltvorgängen die Drehzahl der Brennkraftmaschinen (33) sinkt.

3. Verfahren gemäß Anspruch 1, **dadurch gekennzeichnet, dass** bei Rückschaltvorgängen die Drehzahl der Brennkraftmaschinen (33) auf die Zieldrehzahl des neuen Ganges eingeregelt wird.

4. Verfahren gemäß Anspruch 3, **dadurch gekennzeichnet, dass** bei Rückschaltvorgängen die Motorsteuerung (2) die Drehzahl (7) der Brennkraftmaschine (33) mittels eines Detektors (25) abfragbar und abhängig vom Ausgangsmoment der Brennkraftmaschine (33) regelbar ist.

5. Verfahren gemäß Anspruch 3, **dadurch gekennzeichnet, dass** bei Rückschaltvorgängen der Brennkraftmaschine (33) ein zusätzliches Moment aufgeprägt wird.

6. Verfahren gemäß Anspruch 4, **dadurch gekennzeichnet, dass** die Einregelung der Brennkraftmaschine (33) auf die Zieldrehzahl um so präziser erfolgt, je weiter das Ausgangsmoment der Brennkraftmaschine (33) von Null entfernt liegt.

7. Verfahren gemäß Anspruch 1, **dadurch gekennzeichnet, dass** die Zeitkonstante für die Aktivierung der Load-Response-Funktion (32) vorgebbar ist.

8. Verfahren gemäß Anspruch 7, **dadurch gekennzeichnet, dass** eine Zeitvorgabe von 0 Sekunden die Load-Response-Funktion (32) am Generator (10) deaktiviert.

9. Verfahren nach Anspruch 7, **dadurch gekennzeichnet, dass** der Generator (10) eine serielle Schnittstelle umfasst, an der die Zeitkonstante für die Aktivierung der Load-Response-Funktion (32) vor oder während des Schaltvorganges verstellbar ist.

## Claims

1. Method for keeping constant the voltage of the on-board electric power system in a vehicle having an internal combustion engine (33) having a generator (10) which can be actuated by means of a regulator (8) and to which a load response function (32) which can be activated or deactivated during the occurrence of predefinable conditions is assigned, **characterized in that** when there is a gear speed change initiated by means of a clutch and gearbox controller (3) at an automated change speed gearbox (21) at the regulator (8) of the generator (10) the load response function (32) is deactivated, as a result of which an additional load torque which can be generated by the generator (10) is applied to the internal combustion engine (33) by actuating servomotors (20, 22) for the clutch (15) and the automated change speed gearbox (21).

2. Method according to Claim 1, **characterized in that** at the time of actuation of the servomotors (20, 22) during shifting up operations the rotational speed of the internal combustion engine (33) drops.

3. Method according to Claim 1, **characterized in that** during shifting down operations the rotational speed of the internal combustion engine (33) is adjusted to the target rotational speed of the new gear speed.

4. Method according to Claim 3, **characterized in that** during shifting down operations the engine controller (2) can interrogate the rotational speed (7) of the internal combustion engine (33) by means of a detector (25) and can be regulated as a function of the output torque of the internal combustion engine (33).

5. Method according to Claim 3, **characterized in that** during shifting down operations of the internal combustion engine (33) an additional torque is impressed.

6. Method according to Claim 4, **characterized in that** the internal combustion engine (33) is adjusted to the target rotational speed more precisely the further away the output torque of the internal combustion engine (33) is from zero.

7. Method according to Claim 1, **characterized in that** the time constant for the actuation of the load response function (32) can be predefined.

8. Method according to Claim 7, **characterized in that** a predefined time value of 0 seconds deactivates the load response function (32) at the generator (10).

9. Method according to Claim 7, **characterized in that** the generator (10) comprises a serial interface at which the time constant for the activation of the load response function (32) can be adjusted before or during the gear shifting operation.

## Revendications

1. Procédé pour maintenir constante la tension du réseau embarqué d'un véhicule équipé d'un moteur à combustion interne (33) avec un générateur (10) commandé par un régulateur (8), ayant une fonction charge-réponse (32) activée ou désactivée lorsque se produisent des conditions prédéfinies,
**caractérisé en ce qu'**
en cas de changement de rapport de vitesse initié par la commande d'embrayage et de transmission (3) dans une boite de vitesses automatique (21), le régulateur (8) du générateur (10) désactive la fonction charge-réponse (32) de sorte que le couple de charge généré en plus par le générateur (10) soit appliqué au moteur à combustion interne (33) par la commande du moteur d'actionneur (20, 22) pour l'embrayage (15) et la boite de vitesses automatique (21).

2. Procédé selon la revendication 1,
**caractérisé en ce qu'**
à l'instant de la commande des moteurs d'actionneurs (20, 22) lors des commutations des rapports de vitesse montants, la vitesse de rotation du moteur à combustion interne (33) diminue.

3. Procédé selon la revendication 1,
**caractérisé en ce que**
lorsqu'on rétrograde les rapports de vitesse, on règle la vitesse de rotation du moteur à combustion interne (33) sur la vitesse de rotation cible du nouveau rapport.

4. Procédé selon la revendication 3,
**caractérisé en ce que**
lorsqu'on rétrograde, la commande de moteur demande la vitesse de rotation (7) du moteur à combustion interne (33) par un détecteur (25) et est régulée en fonction du couple de sortie du moteur à combustion interne (33).

5. Procédé selon la revendication 3,
**caractérisé en ce que**
lorsqu'on rétrograde, le moteur à combustion interne (33) reçoit un couple supplémentaire.

6. Procédé selon la revendication 4,
**caractérisé en ce que**
la régulation du moteur à combustion interne (33) sur la vitesse de rotation cible est d'autant plus précise que le couple fourni par le moteur à combustion interne (33) est différent de zéro.

7. Procédé selon la revendication 1,
**caractérisé en ce que**
la constante de temps pour activer la fonction charge-réponse (32) est prédéfinie.

8. Procédé selon la revendication 7,
**caractérisé en ce que**
la prédéfinition d'un temps de 0 seconde désactive la fonction charge-réponse (32) sur le générateur (10).

9. Procédé selon la revendication 7,
**caractérisé en ce que**
le générateur (10) comporte une interface série par laquelle on règle la constante de temps pour activer la fonction charge-réponse (32) avant ou pendant l'opération de commutation.
